(19) Europäisches Patentamt
European Patent Office
Office européen des brevets

(11) Publication number: **0 139 522**
**B1**

(12) # EUROPEAN PATENT SPECIFICATION

(45) Date of publication of patent specification: **20.05.87**

(51) Int. Cl.$^4$: **B 27 K 3/34,** B 27 K 3/40, A 01 N 43/40

(21) Application number: **84307105.1**

(22) Date of filing: **17.10.84**

(54) **Method for controlling termites.**

(30) Priority: **19.10.83 JP 194390/83**
**06.12.83 US 558721**

(43) Date of publication of application:
**02.05.85 Bulletin 85/18**

(45) Publication of the grant of the patent:
**20.05.87 Bulletin 87/21**

(84) Designated Contracting States:
**AT BE CH DE FR GB IT LI LU NL SE**

(56) References cited:
**EP-A-0 004 434**
**GB-A-1 491 330**
**US-A-3 244 722**
**US-H- 425 572**

(73) Proprietor: **THE DOW CHEMICAL COMPANY**
**2030 Dow Center Abbott Road P.O. Box 1967**
**Midland, MI 48640 (US)**

(72) Inventor: **Hamaguchi, Hirohiko**
**75, Nakakibogaoka Asahi-ku**
**Yokohima-shi Kanagawa (JP)**
Inventor: **Kozuma, Jiro**
**515-1, Shinano-machi Tozuka-ku**
**Yokohama-shi Kanagawa (JP)**
Inventor: **Shibahara, Tetsuya**
**4-14-7, Daikan**
**Yamato-shi Kanagawa (JP)**

(74) Representative: **Allard, Susan Joyce et al**
**BOULT, WADE & TENNANT 27 Furnival street**
**London EC4A 1PQ (GB)**

**EP 0 139 522 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a method for controlling termites.

Termites are obnoxious pests well known for their insatiable appetite for materials such as wood and wood products. Because of their craving for such materials, termites are directly responsible for the destruction of man-made wooden structures such as, for example buildings, foundations, fence posts, etc. To control the termites, the soil and/or the building materials have been treated with materials such as pentachlorophenol, aldrin, chlordane, dieldrin, heptachlor some arsenic compounds and creosote. However, these substances are hightly toxic and are notorious environmental pollutants, and there is a need for less toxic and environmentally less damaging chemical substitutes. Thus, it is quite evident that there is a need for a means for reducing and/or preventing the attack on such materials by termites which provides long lasting control while at the same time possessing low acute toxicity towards mammals.

The present invention is directed to a method for preventing and/or reducing the attack of termites on wood and wood products by contacting the material with an effective amount of halo substituted pyridinol compound or an acceptable salt, ether or ester thereof.

Briefly, in accordance with the present invention, termites are controlled by contacting cellulosic material with an effective amount of one or more active compounds corresponding to the formula:

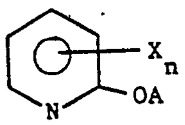

( I )

wherein

A represents hydrogen, a metal ion such as an alkali metal, an alkaline earth metal, zinc, iron, manganese or

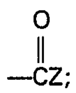

each X independently represents chloro, fluoro, bromo, or iodo;

n is 0, 1, 2, 3 or 4, and

Z represents alkyl of 1 to 11 carbon atoms, haloalkyl of 1 to 11 carbon atoms or hydroxyalkyl of 1 to 11 carbon atoms.

By the term "alkyl" as used herein is meant straight and branched chain alkyl groups containing from 1 carbon atom up to the upper carbon atom limit as specifically set forth and cycloalkyl groups containing from 3 carbon atoms up to the upper carbon atom limit as specifically set forth. By the term "haloalkyl" is meant alkyl groups substituted with from 1 to 4 chloro, fluoro, bromo, or iodo groups. By the term "hydroxyalkyl" is meant alkyl groups substituted with 1 or 2 hydroxy groups.

It is well known that pyridinols exists in the pyridinol and tautomeric pyridone form. When any reference is made to the active compounds of Formula I where A is hydrogen, it is understood to encompass both tautomeric forms.

For convenience, the compounds will be hereinafter referred to as "active compounds". The active compounds are applied to the wood and wood products including paper and paper products, which is a food source for the termites, in amounts effective to reduce and/or prevent attack of the material by the termites.

Of particular interest in the practice of the present invention is a method of controlling termites employing as the active compound 3,5,6-trichloro-2-pyridinol or an effective salt thereof by application to materials such as wood, wood products, paper and paper products. Application of the active compound to the said material can be accomplished by dipping, spraying or painting the material with a composition containing the active compound.

The term "controlling termites" or any variation thereof, is employed to describe the activity of the active compounds of Formula I in reducing and/or preventing the attack of termites on the treated material.

The specific mechanism by which the active compounds reduce and/or prevent the termites from attacking the materials such as wood, wood products, paper, and paper products is not known. It appears, however, that the active compounds in some way make these materials unpalatable to the termites.

The active compounds of the present invention useful for controlling termites, can be applied in unmodified form but they are conveniently applied in the form of a liquid or finely-divided solid composition containing inert adjuvants or carriers to aid in dispersing the active compounds to treat the materials whereby eventual contact with the termite will be established so that termite control is achieved. In addition, wood rot also is reduced and/or prevented by the present treatment. Suitable carriers include water, alcohols, glycols, kerosene, other petroleum distillates and aromatic solvents or convenient combinations of any of these or other suitable carrier systems or solvents. The active compounds can also be dispersed in a finely-divided solid and employed as dusts for application to the cellulosic material. The active compounds can also be absorbed into solid carrier clays and employed as granules for application to

the material. These solid compositions can also be dispersed in water optionally with the aid of a surfactant and the resulting aqueous suspensions can be applied to the material as a drench or spray.

The above emulsifiable concentrates are prepared employing standard well-known formulations techniques. For example, the active compounds are mixed with petroleum distillate, such as xylene; an organic solvent, such as dimethylformamide (DMF)) and an emulsifying agent (surfactant) to form an emulsifiable concentrate, which upon dilution with water forms a suitable aqueous emulsion for application to wood or wood products.

The active compounds are preferably applied to the materials which may be subject to attack by termites. The most common applications will be to wood, wood products, paper and paper products. The preferred material is wood. When wood is treated, the active compounds are usually applied to said material as an oil formulation containing organic solvents as the carrier. Suitable organic solvents include kerosene, xylene, toluene and other petroleum distillates. Other organic solvents such as DMF can be added to the oil formulations. A preferred oil formulation would include, for example, 1 to 2 parts by weight active compound, 95 to 97 parts by weight kerosene and 2 to 3 parts by weight DMF.

In such applications to wood, the active compounds, in an oil formulation, can be applied by brushing, dipping spraying or the like according to known procedures. Usually, the concentration of active compound in the oil formulation is from about 0.00001 to about 10.0 percent by weight and preferably from about 0.1 to 2.0 percent by weight. The oil formulation is applied to the wood in quantities sufficient to thoroughly wet its surface. Alternatively, the active compounds can be applied to wood in a pressure treatment whereby the active compound penetrates deeply into the wood.

In one embodiment of the present invention 3,5,6-trichloro-2-pyridinol or an acceptable salt thereof is brushed onto wood in an oil formulation for controlling termites. In this embodiment, damage by termites to the treated wood is prevented.

The exact amount of active compound to be employed when treating the above materials is not critical as long as an amount effective to control termites is retained by the material being treated. The actual amount of the active compound retained by materials such as wood will depend upon a variety of factors such as, for example, type of wood, surface area, moisture content of the wood, density and method of treatment. The optimum amount for an individual application can be readily determined by one skilled in the art employing standard rate titration experiments.

The following examples illustrate the practice of the present invention but should not be construed as limiting its scope.

### Example 1

Oil Formulation

The following ingredients were mixed to form oil formulations of 3,5,6-trichloro-2-pyridinol.

Formulation A

| Ingredient | Parts by Weight |
|---|---|
| 3,5,6-trichloro-2-pyridinol | 0.5 |
| Kerosene | 97.0 |
| Dimethylformamide | 2.5 |
| | 100.0 |

Formulation B

| Ingredient | Parts by Weight |
|---|---|
| 3,5,6-trichloro-2-pyridinol | 1.0 |
| Kerosene | 97.0 |
| Dimethylformamide | 2.0 |
| | 100.0 |

Formulation C

| Ingredient | Parts by Weight |
|---|---|
| 3,5,6-trichloro-2-pyridinol | 2.0 |
| Kerosene | 95.0 |
| Dimethylformamide | 3.0 |
| | 100.0 |

The above formulations were employed as compositions in treating wood for the control of termites.

Example 2

Pine Wood Stakes Treatment

Pine wood stakes were treated with Formulations A, B and C of Example 1 by twice brushing the formulation onto the surface of the stake to thoroughly wet it. The treated pine stakes were then installed in the Pine Forest of Fukiage Beach, Kagoshima, Japan, in April. Untreated pine wood stakes were also installed concurrently to serve as a control. The treated pine stakes were driven into the ground and five (5) untreated pine stakes were also driven into the ground encircling the treated stakes. Six months later (in September), the treated and untreated stakes were evaluated for termite chewing on a rating scale of 0, 1, 2, 3 or 4. A "0" indicates no damage by termite chewing while a "4" indicates severe damage by termite chewing. The results are listed in Table I.

TABLE I

| Formulation | Treated Stake Number | Rating | Untreated Stake Number Rating | | | | |
|---|---|---|---|---|---|---|---|
| | | | 1 | 2 | 3 | 4 | 5 |
| A | 1 | 0 | 1 | 1 | 1 | 1 | 1 |
| | 2 | 0 | 3 | 1 | 1 | 1 | 1 |
| | 3 | 0 | 3 | 1 | 1 | 1 | 1 |
| | 4 | 0 | 1 | 1 | 1 | 1 | 1 |
| | 5 | 0 | 1 | 1 | 1 | 1 | 1 |
| B | 1 | 0 | 1 | 1 | 0 | 1 | 1 |
| | 2 | 0 | 2 | 1 | 1 | 1 | 1 |
| | 3 | 0 | 1 | 2 | 1 | 1 | 2 |
| | 4 | 0 | 1 | 2 | 1 | 1 | 1 |
| | 5 | 0 | 0 | 1 | 1 | 1 | 0 |
| C | 1 | 0 | 1 | 1 | 2 | 1 | 2 |
| | 2 | 0 | 2 | 2 | 2 | 3 | 3 |
| | 3 | 0 | 2 | 2 | 1 | 2 | 3 |
| | 4 | 0 | 3 | 2 | 1 | 2 | 3 |
| | 5 | 0 | 1 | 2 | 1 | 1 | 1 |

Example 3

Wood Block Test

Formulations A and B were brushed onto 5 wooden blocks (1 cm × 1 cm × 2 cm) in a quantity sufficient to thoroughly wet the block. Each block was placed under a glass beaker with 150 worker termites and 15 army termites. The blocks rested directly on plaster with cotton and water directly underneath the plaster. Weathering treatments were also conducted which were substantially the same as the standard treatment described above except that after brushing the wooden blocks, they were dipped into water for 30 seconds and dried with warm air for four hours. The blocks were weighed both after treatment with the formulations and 21 days thereafter and differences compared. The results are listed below in Table II.

TABLE II

| Treatment | Average Block Weight Reduction in Percent 21 Days After Treatment |
|---|---|
| Formulation A | 5.54 |
| Formulation B | 3.28 |
| Control (Untreated) | 28.2 |
| Formulation A (Weather Treatment) | 8.59 |
| Formulation B (Weather Treatment) | 7.55 |
| Control (Untreated) | 28.5 |

Example 4

Wood Block Test

Formulations were prepared by admixing a predetermined amount of one of the hereinafter set forth active compounds with a predetermined amount of kerosene and predetermined amount of dimethylformamide to obtain compositions containing 0.2 and 2.0 percent of the active compound.

Each of the above formulations were brushed onto 5 wooden blocks (1 cm × 1 cm × 2 cm) in a quantity sufficient to thoroughly wet the block. Each block was placed under a glass beaker with 150 worker termites and 15 army termites. The blocks rested directly on plaster with cotton and water directly underneath the plaster. The blocks were weighed both after the treatment with the formulation and 21 days thereafter and the differences compared. The results are listed below in in Table III.

TABLE III

| Compound Tested | Treating Concentration in Percent | Average Block Weight Reduction in Percent 21 Days After Treatment |
|---|---|---|
| 6-Chloro-2-pryidinol | 2.0<br>0.2 | 3.27<br>4.50 |
| 6-Fluoro-2-pyridinol | 2.0<br>0.2 | 4.23<br>4.37 |
| 3,5-Dibromo-2-pyridinol | 2.0<br>0.2 | 0.90<br>2.17 |
| 3,5-Dichloro-6-fluro- -2-pyridinol | 2.0<br>0.2 | 2.23<br>4.17 |
| 5-Bromo-3-chloro-2-pyridinol | 2.0<br>0.2 | 1.50<br>4.03 |
| 3,5-Dibromo-6-fluoro- -2-pyridinol | 2.0<br>0.2 | 3.17<br>4.67 |
| 3,5,6-Trichloro-2-pyridinol | 2.0<br>0.2<br>0.02<br>0.002<br>0.0002 | 1.24<br>1.26<br>9.04<br>9.04<br>8.44 |
| 3,4,5,6-Tetrachloro -2-pyridinol | 2.0<br>0.2 | 2.30<br>3.23 |
| 3,5-Dichloro-2-pyridyl ester of acetic acid | 2.0<br>0.2 | 4.80<br>3.90 |
| 3,5,6-Trichloro-2-pyridyl ester of acetic acid | 2.0<br>0.2 | 3.07<br>3.63 |
| Control (untreated) | 0 | 29.7 |

**Claims**

1. A method of reducing and/or preventing the attack on wood and wood products by termites which comprises contacting the wood or wood products with an effective amount of one or more active compounds of the formula:

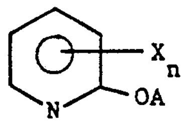

( I )

wherein

A represents hydrogen, a metal ion such as an alkali metal, an alkaline earth metal, zinc, iron, manganese or

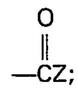

each X independently represents chloro, fluoro, bromo, or iodo;

n is 0, 1, 2, 3 or 4, and

Z represents alkyl of 1 to 11 carbon atoms, haloalkyl of 1 to 11 carbon atoms or hydroxyalkyl of 1 to 11 carbon atoms.

2. A method as claimed in Claim 1 wherein the active compound is 3,5,6- trichloro- 2 -pyridinol, 6-chloro-2-pyridinol, 3,5-dibromo-2-pyridinol, 5-fluoro-2-pyridinol, 3,5-dibromo-6-fluoro-2-pyridinol, 3,4,5,6-tetrachloro-2-pyridinol, 5-bromo-3-chloro-2-pyridinol, the 3,5,6-trichloro-2-pyridyl ester of acetic acid, or the 3,5-dichloro-2-pyridyl ester of acetic acid.

3. A method as claimed in Claim 1 or Claim 2 wherein the active compound is employed together with one or more diluents or carriers.

4. A method as claimed in any one of Claims 1 to 3 wherein the active compound is applied to wood by dipping, spraying or painting the wood.

5. A method as claimed in Claim 3 wherein the termite controlling composition contains the active compound in an amount of from 0.00001 to 10 percent by weight.

6. A method as claimed in Claim 5 wherein the termite controlling composition contains the active compound in an amount of from 0.1 to 2.0 percent by weight.

7. Wood which has been treated with a composition containing an effective amount of one or more active compounds:

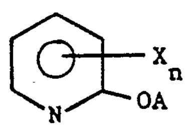

( I )

wherein

A, X and n are as defined in Claim 1.

8. The product of Claim 7 wherein the active compound is a compound as claimed in Claim 2.

9. The product of Claim 7 wherein the active compound is applied to wood by dipping, spraying or painting the wood.

10. The product of Claim 7 wherein the active compound is employed together with one or more diluents or carriers.

11. The product of Claim 10 wherein the termite controlling composition contains the active compound in an amount of from 0.00001 to 10 percent by weight.

12. The product of Claim 10 wherein the termite controlling compositions contains the active compound in an amount of from 0.1 to 2.0 percent by weight.

**Patentansprüche**

1. Verfahren zur Verringerung und/oder Verhütung des Angriffes von Holz und Holzprodukten durch Termiten, dadurch gekennzeichnet, daß man das Holz oder Holzprodukte mit einer wirksamen Menge einer oder mehrerer aktiver Verbindungen der Formel:

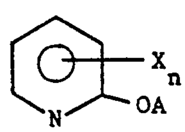

( I )

behandelt, worin

A Wasserstoff ein Metallion, wie ein Alkalimetall, ein Erdalkalimetall, Zink, Eisen, Mangan oder

$$-\overset{\overset{\displaystyle O}{\|}}{C}Z;$$

darstellt,

jedes X unabhängig voneinander Chlor, Fluor, Brom oder Jod bedeutet;

n 0,1,2,3 oder 4 ist; und

Z Alkyl mit 1 bis 11 Kohlenstoffatomen, Halogenalkyl mit 1 bis 11 Kohlenstoffatomen oder Hydroxyalkyl mit 1 bis 11 Kohlenstoffatomen darstellt.

2. Verfahren nach Anspruch 1, dadurch gekennzeichnet, daß die aktive Verbindung 3,5,6-Trichlor-pyridin-2-ol, 6-Chlor-pyridin-2-ol, 3,5-Dibrompyridin-2-ol, 6-Fluor-pyridin-2-ol, 3,5-Dibrom-6-fluor-pyridin-2-ol, 3,4,5,6-Tetrachlor-pyridin-2-ol, 5-Brom-3-chlor-pyridin-2-ol, der 3,5,6-Trichlor-pyrid-2-yl-ester der Essigsäure oder der 3,5-Dichlor-pyrid-2-yl-ester der Essigsäure ist.

3. Verfahren nach Anspruch 1 oder Anspruch 2, dadurch gekennzeichnet, daß die aktive Verbindung zusammen mit einem oder mehreren Verdünnungsmitteln oder Trägern verwendet wird.

4. Verfahren nach einem der Anspruch 1 bis 3, dadurch gekennzeichnet, daß die aktive Verbindung auf Holz durch Eintauchen, Besprühen oder Bestreichen des Holzes appliziert wird.

5. Verfahren nach Anspruch 3, dadurch gekennzeichnet, daß die Zusammensetzung zur Bekämpfung der Termiten die aktive Verbindung in einer Menge von 0,00001 bis 10 Gew.-% enthält.

6. Verfahren nach Anspruch 5, dadurch gekennzeichnet, daß die Zusammensetzung zur Bekämpfung der Termiten die aktive Verbindung in einer Menge von 0,1 bis 2,0 Gew.-% enthält.

7. Holz, das mit einer Zusammensetzung behandelt wurde, die eine wirksame Menge einer oder mehrerer aktiver Verbindungen der Formel

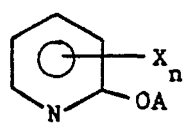

( I )

enthält, worin

A, X und n die in Anspruch 1 angegebene Bedeutung besitzen.

8. Produkt nach Anspruch 7, dadurch gekennzeichnet, daß die aktive Verbindung eine im Anspruch 2 beanspruchte Verbindung ist.

9. Produkt nach Anspruch 7, dadurch gekennzeichnet, daß die aktive Verbindung auf das Holz durch Eintauchen, Besprühen oder Bestreichen des Holzes appliziert wird.

10. Produkt nach Anspruch 7, dadurch gekennzeichnet, daß die aktive Verbindung zusammen mit einem oder mehreren Verdünnungsmitteln oder Trägern verwendet wird.

11. Produkt nach Anspruch 10, dadurch gekennzeichnet, daß die Zusammensetzung zur Bekämpfung der Termiten die aktive Verbindung in einer Menge von 0,00001 bis 10 Gew.-% enthält.

12. Produkt nach Anspruch 10, dadurch gekennzeichnet, daß die Zusammensetzung zur Bekämpfung der Termiten die aktive Verbindung in einer Menge von 0,1 bis 2,0 Gew.-% enthält.

**Revendications**

1. Procédé pour réduire et/ou empêcher l'attaque du bois et des produits en bois par les termites, qui comporte la mise en contact du bois ou des produits en bois avec une quantité efficace d'un ou plusieurs composés actifs de formule:

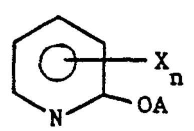

( I )

dans laquelle A représente l'hydrogène, un ion d'un métal tel qu'un métal alcalin, un métal alcalino-terreux, le zinc, le fer, le manganèse, ou

$$-\overset{\overset{\displaystyle O}{\|}}{C}Z;$$

chaque X représente indépendamment le chlore, le fluor, le brome ou l'iode; n vaut 0, 1, 2, 3 ou 4; et Z représente un groupe alkyle de 1 à 11 atomes de carbone, alkyle halogéné de 1 à 11 atomes de carbone ou hydroxyalkyle de 1 à 11 atomes de carbone.

2. Procédé selon la revendication 1, dans lequel le composé actif est le 3,5,6-trichloro-2-pyridinol, le 6-chloro-2-pyridinol, le 3,5-dibromo-2-pyridinol, le 6-fluoro-2-pyridinol, le 3,5-dibromo-6-fluoro-2-pyridinol, le 3,4,5,6-tétrachloro-2-pyridinol, le 5-bromo-3-chloro-2-pyridinol, l'acétate de 3,5,6-trichloro-2-pyridyle ou l'acétate de 3,5-dichloro-2-pyridyle.

3. Procédé selon la revendication 1 ou 2, dans lequel le composé actif est utilisé simultanément avec un ou plusieurs diluants ou véhicules.

4. Procédé selon l'une quelconque des revendications 1 à 3, dans lequel on applique le composé actif au bois en immergeant ou en enduisant le bois ou en le pulvérisant dessus.

5. Procédé selon la revendication 3, dans lequel la composition de lutte contre les termites contient le composé actif en une quantité allant de 0,00001 à 10 pour cent en poids.

6. Procédé selon la revendication 5, dans lequel le composition de lutte contre les termites contient le composé actif en une quantité allant de 0,1 à 2,0 pour cent en poids.

7. Bois qui a été traité avec une composition contenant une quantité efficace d'un ou plusieurs composés actifs:

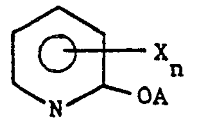

( I )

dans lesquels A, X et n sont tels que définis dans la revendication 1.

8. Produit selon la revendication 7, dans lequel le composé actif est un composé selon la revendication 2.

9. Produit selon la revendication 7, dans lequel on applique le composé actif au bois en immergeant ou en enduisant le bois ou en le pulvérisant dessus.

10. Produit selon la revendication 7, dans lequel le composé actif est utilisé simultanément avec un ou plusieurs diluants ou véhicules.

11. Produit selon la revendication 10, dans lequel la composition de lutte contre les termites contient le composé actif en une quantité allant de 0,00001 à 10 pour cent en poids.

12. Produit selon la revendication 10, dans lequel la composition de lutte contre les termites contient le composé actif en une quantité allant de 0,1 à 2,0 pour cent en poids.